# EUROPEAN PATENT SPECIFICATION

(11) **EP 2 274 166 B1**
(45) Date of publication and mention of the grant of the patent: **18.07.2012**
(21) Application number: 09714105.5
(22) Date of filing: 24.02.2009
(51) Int. Cl.: B32B 17/10, C03C 27/12, E06B 5/16

(54) **FIRE RESISTANT GLAZINGS**
FEUERFESTE VERGLASUNGEN
VITRAGES RÉSISTANTS AU FEU

(30) Priority: 29.02.2008 GB 0803784
(43) Date of publication of application: 19.01.2011
(73) Proprietor: Pilkington Group Limited, St. Helens Merseyside WA10 3TT (GB)
(72) Inventor: VARMA, Karikath Sukumar, Southport Merseyside PR8 2BE (GB); STIEFVATER-THOMAS, Benjamin Michael, Chorley Lancashire PR7 7AQ (GB)
(74) Representative: Marsh, Andrew James
(86) International application number: PCT/GB2009/050183
(87) International publication number: WO 2009/106883

(56) References cited:
- DE-A1-102005 027 404
- DE-U1-202004 001 010
- US-A- 4 391 924
- US-A- 5 437 902
- US-B1- 6 340 508
- US-B1- 6 818 267

## Description

This invention relates to fire resistant laminated glazings, to methods for sealing the edges of those glazings and to novel compositions useful in the methods of the invention.

Fire resistant laminated glazings comprising at least one interlayer of an intumescent material and at least two panes of glass are well known. One common type of such glazings comprises an intumescent interlayer which is obtained by drying an aqueous solution of an alkali metal silicate solution. Pilkington Group Limited sells this type of glazing under its trade marks PYROSTOP and PYRODUR. When these laminates are exposed to a fire the interlayer intumesces and expands to form a foam. The foam provides a thermally insulating layer which acts as a barrier to infra-red radiation and also helps to maintain the integrity of the glazing thus restricting the spread of the fire. These glazings can meet the requirements of most applicable building regulations and are widely used in architecture and building.

The interlayers are very sensitive to external influences. In particular, they are hygroscopic, i.e. they have an attractive effect on water or water vapour and react therewith. Reactions with carbon dioxide also occur. Exposure to the atmosphere causes the interlayer to decompose. It becomes milky and may become detached from the edges of the glass at the point at which the surface of the interlayer is not covered by one of the glass panes and is thereby exposed to the atmosphere. The milky discoloration does not necessarily significantly impair its fire resistant properties but it is not acceptable for optical and aesthetic reasons in fire-resistant glazings which are otherwise transparent. Evaporation of water from the exposed edges of the interlayer over an extended period of time may detract from the fire resistant properties of the glazing.

In order to protect the interlayer from external influences and to minimise the evaporation of water, an edge protection tape comprising an aluminium foil may be used to cover the end faces of the fire-resistant glazing, i.e. on the cut faces of the individual glass panes and on the free surfaces of the interlayer. The edge protection band projects a little beyond the end faces of the glass panes and extends onto the inner and/or outer front face of the fire-resistant glazing. Even with a comparatively small thickness, the aluminium foil is very diffusion-tight against gases and also against water, i.e. it prevents in particular contact of atmospheric moisture and carbon dioxide with the free surfaces of the interlayer.

The strips of the edge protection tape which extend onto the major surfaces of the glass panes are especially optically disturbing when the fire-resistant glazing is to be designed as a frameless glazing transparent over the whole area, e.g. as a frameless fire-resistant glass door (all-glass fire-resistant glass door). The term "frameless glazing" also includes those installation situations in which not all the edges, but only a part of the latter are installed without frames surrounding the edge. In the case of the installation situations typically existing hitherto, i.e. the installation of the fire-resistant glazing in surrounding U-shaped or rectangular steel or aluminium or wood edge profiles, said marginal strips of the edge protection bands are not disturbing, since they are then covered by the aforementioned profiles.

These edge tapes are expensive and must be applied by hand which is a labour intensive and expensive procedure. If they are not applied carefully they can become detached over time. They are normally applied so as to overlap the edge of the glazing and this detracts from the appearance of the glazing particularly if it is used in a so called frameless glazing.

There is thereby a need for a method of sealing the edges of these fire resistant glazings which is less expensive than the application of these aluminium tapes; which is easier to apply than these tapes and which preferably does not detract from the aesthetic appearance of the glazings.

WO 2006/133896 discloses the use of a sealant comprising a silane/epoxide adhesive to seal the edges of a fire resistant glazing. These adhesives are applied using a double cartridge from which the mixed sealant can be ejected and applied to the edges of the glass. These sealants are applied only to the edges of the glazing and as the use of the aluminium foil is not required the glazings have an improved appearance. However these are hybrid sealants which are applied using a double cartridge system and which may not be optically clear.

We have now discovered that the application of a carrier vehicle comprising nano particulate silica to the edges of these glazings can provide a seal which in a preferred embodiment is optically clear and which provides an effective seal or which enables an effective seal to be provided using a cheaper edge tape than has previously been the case. These liquid dispersions of nano particulate silica can be applied to the edges of the glass easily and economically and the seal which results does not detract from the appearance of the glazing.

Accordingly from a first aspect this invention provides a fire resistant laminated glazing comprising at least two glass panes, at least one intumescent fire resistant interlayer and a layer of sealant extending around all or substantially all of the exposed edges of the interlayer or interlayers characterised in that the sealant comprises a nanoparticulate silica.

From a second aspect the invention provides a method for sealing the edge of a fire resistant glazing which comprises at least two glass panes and at least one intumescent interlayer comprising an alkali metal silicate which method comprises applying a sealant which comprises a nanoparticulate silica to the exposed edges of the interlayer or interlayers and the glass panes.

The sealant is applied directly or indirectly to the exposed edges of the interlayer in a manner such that the free surfaces of the interlayer and at least the adjacent edges of the glass panes are completely covered. Where the glazing comprises more than one interlayer the sealant will preferably cover the whole of the exposed edges of the glass panes and the interlayers. A priming layer or other suitable interlayer may be applied to these surfaces prior to the application of the sealant.

The sealant preferably comprises nanoparticulate silica particles dispersed in a liquid medium which is capable of forming a film which is non porous and acts as a barrier to the passage of both gases and liquids. The film comprising the nanoparticulate silica should extend over the exposed edge of the interlayer and at least a part of the exposed edges of the glass panes and thereby constitute a continuous seal extending around the perimeter of the glazing.

The sealant may also take the form of an adhesive tape having nanoparticulate silica particles dispersed through the adhesive layer. The tape may be formed from a variety of materials including less acrylics. The improved performance of the seal comprising the nanoparticles means that there may be no necessity to use the known aluminium tapes in order to achieve a satisfactory seal. The nanoparticulate silica could be applied to the known metal tapes but this is less preferred as it adds cost to what is an acceptable product.

A film may be formed by drying a solution or dispersion or by allowing excess liquid to evaporate. In a preferred embodiment the nanoparticulate silica is dispersed in a polymerisable liquid medium which comprises at least one monomer or oligomer which may be cured to form a polymeric film. The dispersion may be applied to the edge of the glazing and cured immediately thereafter. Preferably the curing reaction is one which can be initiated by the application of e.g. UV radiation, E beam radiation or heat which radiation can be directed onto the dispersion immediately after it has been applied to the edges of the glazing.

In the preferred embodiments the curing is carried out under conditions which control oxygen inhibition of the polymerisation reaction. Processes in which the curing is carried out in the presence of an oxygen scavenger form a preferred aspect of the invention. Processes in which the curing is initiated using UV radiation and carried out under an inert atmosphere are also useful but may be less practical in a production environment.

The nanoparticulate silicate is preferably an organically modified silica. Organically modified silicas are known as Ormosils and are silica nanoparticles which have been modified by treatment with an organic compound in a manner which converts the silanol groups to Si-O-C groups. The modified silica particles are more soluble and/or more dispersible in organic media. They show less tendency to aggregate than unmodified silica particles. Without wishing to be bound by any theory the applicants believe that sealants which comprise nanoparticulate silica and in particular those which comprise organically modified silicas provide a superior seal because they are capable of reacting with any alkaline species and in particular with any silicate species which diffuse out of the intumescent fire resistant interlayer.

Silica particles may be treated with a variety of organic compounds such as epoxides, silicones, acrylates, urethanes, isocyanates, urethane acrylates and alcohols in order to produce an Ormosil. Examples of organic compounds which can be used to produce an Ormosil include glycerol, ethylene glycol, propylene glycol, 2-hydroxyethyl methacrylate, dipropyleneglycol diacrylate, tripropyleneglycol diacrylate and isobornyl acrylate. Ormosils are available as articles of commerce and any of those commercially available materials are potentially useful in the present invention. These Ormosils can be applied directly to the edges of the glazing but the seal which results has a tendency to shrink and crack and methods which apply an Ormosil directly represent a less preferred aspect of the present invention. A more preferred aspect is to incorporate the ormosil within a liquid vehicle which can be applied to the edges of the glazing. The liquid vehicle may comprise additives to control and stabilise the storage, handling, application and subsequent cure of the formulation to form a film.

The silica particles used in this invention will preferably have an average particle size which is within the range of 10 to 100nm. Particles which have a size greater than 80nm may form a less transparent film which in the extreme may be opaque. For this reason when a clear seal is desired the silica particles will preferably have an average particle size which is in the range 20 to 70nm and may typically have an average particle size of approximately 50nm.

The Ormosil is preferably dispersed or dissolved in an organic medium. The resulting solution or dispersion preferably contains from 1% to 75% by weight of silica, more preferably from 10 to 60% by weight of silica and most preferably from 10 to 50% by weight of silica. The Ormosil and the medium in which it is dispersed will be selected so as to enable a stable solution or dispersion containing the desired quantity of silica to be produced.

The organic medium is preferably a film forming organic medium. The Ormosil is preferably dissolved or dispersed in a polymerisable organic medium. The preferred media for use in the present invention include epoxies, silicones, urethanes, acrylates and methacrylates and their co-polymers. Film forming media which comprise a blend of more than one component are also useful in the present invention.

The viscosity of the solution or dispersion may be adjusted by selection of the film forming media or by adjusting the composition of the film forming medium. The preferred viscosity of the solutions or dispersions varies according to a number of parameters including the method of application, the roughness of the surfaces to which the solution or dispersion is applied and the thickness of the seal which is to be produced.

The solution or dispersion is applied to edges of the glass and the application of excessive quantities can lead to the solution running down the major surfaces of the glazing which is not aesthetically acceptable in most applications. The edge of the glass may be planar, rounded or bevelled. The edge of the interlayer may lie below the edge of the glass sheets and thereby defme a channel between the faces of the two glass sheets. The surface of the glass and especially the surfaces of the edges of the glass may comprise microscopic cracks and other imperfections. The solution or dispersion will fill these cracks and may fill any channel between the faces of the glass panes. The film produced should be coherent and continuous and should cover the surface of the interlayer and at least a part of the edge of each glass pane.

The thickness of the film which is produced is proportional to the amount of solution which was applied. Thicker films may be produced by repeated applications of the solution or by rheologically modifying the solution using conventional thickening agents known in the art and compatible with the organic medium selected. Generally the thickness of the sealant above the exposed surface of the interlayer will be less than 3mm and more usually less than 2mm.

The application of the solution or dispersion is continued until a film of the desired thickness has been formed on the edge of the glass. The thickness of the film is the thickness of the coherent film which extends above the surface of the interlayer. The desired thickness may vary through a wide range typically from 20µm to 2mm.

An adhesion promoter such as a silane primer may be applied to the surfaces of the edge of the glass panes before the film is applied in order to improve the adhesion between the cured film and the glass or alternatively added to the coating solution to improve the adhesion characteristics.

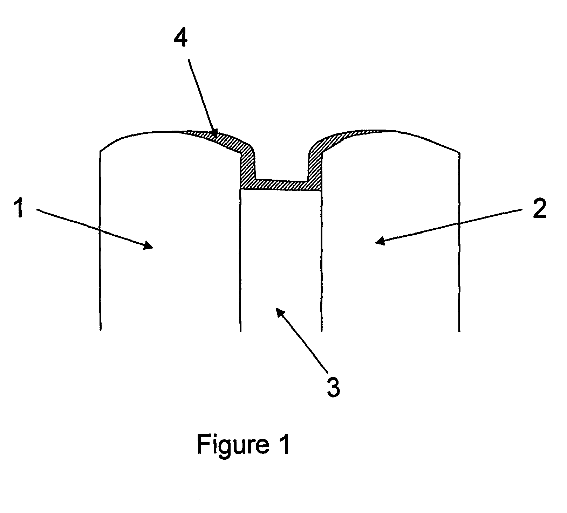

Figures 1, 2 and 3 are cross sectional views of the edges of three typical laminated glazing. These Figures are not drawn to scale. The laminate comprises two glass panes 1 and 2 and a fire resistant interlayer 3. Seal 4 covers the exposed edge of the interlayer and extends across the exposed edges of the glass panes 1 and 2.

In Figure 1 glass panes 1 and 2 have rounded edges. Interlayer 3 lies between panes 1 and 2. The top edge of interlayer 3 lies below the top edges of panes 1 and 2. The seal 4 covers the top edge of interlayer 3 and extends across a part of the top edges of panes 1 and 2.

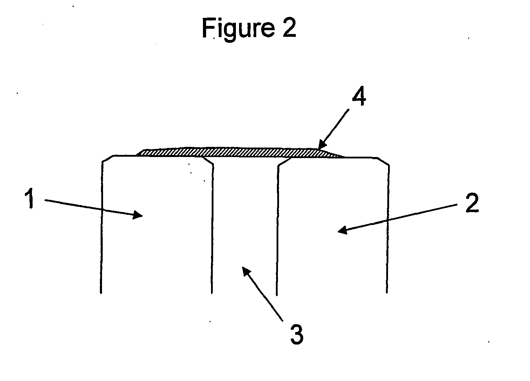

In Figure 2 glass panes 1 and 2 have top edges which are substantially planar with bevelled corners. Interlayer 3 lies between panes 1 and 2. The top edge of interlayer 3 is substantially flush with the top edges of panes 1 and 2. The seal 4 covers the top edge of interlayer 3 and extends across a part of the top edges of panes 1 and 2.

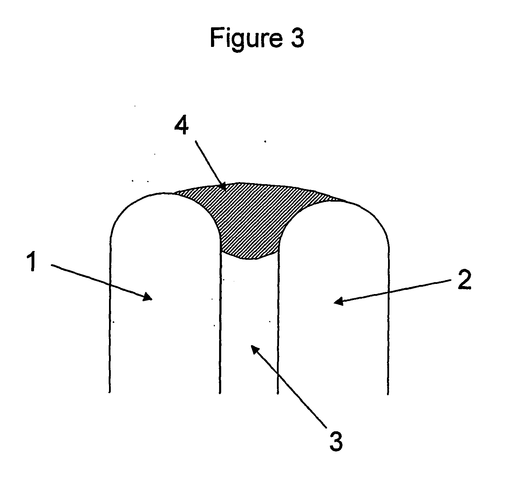

In Figure 3 glass panes 1 and 2 have rounded edges. Interlayer 3 lies between panes 1 and 2. The top edge of interlayer 3 lies below the top edges of panes 1 and 2. Seal 4 fills the channel formed between the edges of the panes1 and 2 and interlayer 3 and the top edge of seal 4 extends above the top edge of panes 1 and 2.

The seal 4 may be formed by supporting the laminates in a vertical or substantially vertical position and applying a solution or dispersion according to the invention to the top edge of the glazing. The thickness of the seal produced is proportional to the amount of solution which is applied and the size and shape is governed by the surface tension of the solution. The quantity of solution which is applied will normally be controlled so as to avoid excess solution overflowing the top edges of the glazing and contaminating the major surfaces of panes 1 or 2.

The quality of the seal which is produced may be tested by accelerated ageing and weathering tests on the sample. Storage at elevated temperatures and/or storage at near 100% humidity leads to degradation of the sample unless the seal is of sufficient quality at the edge. The quality of the seals of the present invention has been demonstrated by immersing a glazing in water at ambient temperature for a period of two weeks. There were no visible changes to the seal or to the interlayer following this immersion test. By way of comparison it should be noted that the interlayer in a glazing whose edges are not sealed, is dissolved to a depth of several centimetres after a few hours immersion in water.

In frameless glazings and doors the seal is visible and should retain its appearance over an extended period. The appearance of the seals of this invention have been tested by exposure to the atmosphere at elevated temperatures. Their appearance was unchanged after 96 hours at 70°C.

The production of fire resistant laminated glazings having a waterglass based interlayer has been described in a number of patents including British Patents GB 1518598 and GB 2199535, United States Patents USP 4451312, USP 4626301 and USP 5766770. USP 4626301 and USP 5766770 further disclose the incorporation of a polyhydric organic compound into the waterglass solution.

The preferred alkali metal silicate waterglasses for use in the production of the interlayers of this invention are sodium or potassium silicate waterglasses. Any of the sodium silicate waterglasses which are known to be useful in the art may be used in this invention. The sodium silicates may be those wherein the weight ratio of SiO₂ : Na₂O is at least 1.6:1 and preferably is in the range 2.0:1 to 6.0:1, more usually in the range 2.0: to 4.0:1. These preferred silicates are those wherein the weight ratio SiO₂ : M₂O is in the range 2.5 to 4.0. Sodium silicate waterglass solutions having a weight ratio of SiO₂:Na₂O in the range 2:1 to 4:1 are available as articles of commerce. Specifically solutions wherein this ratio is 2.0:1, 2.5:1, 2.85:1, 3.0:1 and 3.3:1 are available as articles of commerce. Solutions having a weight ratio of SiO₂:Na₂O intermediates between these values may be produced by blending these commercially available materials.

Potassium silicate and lithium silicate waterglass solutions may also be used to produce the interlayers of this invention. In general they will be used as a partial replacement for the sodium silicate waterglass and the molar ratio of sodium ions to the total of potassium and/or lithium ions is at least 2:1. Where a potassium silicate waterglass is used it is preferably one in which the molar ratio of SiO₂:K₂O is in the range 1.4:1 to 2.5:1.

In a preferred embodiment the alkali metal silicate waterglass solution comprises a mixture of a sodium silicate waterglass and a potassium silicate waterglass. More preferably such solutions comprise a mixture in which the molar ratio of sodium ions to potassium ions is at least 3:1 are most preferably at least 4:1.

The waterglass solutions used in the production of the interlayers of this invention will preferably comprise a relatively high proportion of solid materials. The solutions must be clear stable aqueous solutions which can be dried to form clear interlayers. More dilute solutions may be used but the additional water adds to the amount of water which must be removed during the drying step. The preferred solutions comprise from 30 to 45% by weight of solid materials. Waterglass solutions comprising from 35 to 40% by weight of solid materials are commercially available and are thereby preferred.

The solutions used to produce the interlayers of this invention may further comprise one or more of the polyhydric organic compounds which are known in the art to be useful adjuvants. Polyhydric compounds which have been proposed for use include glycerol, a derivative of glycerol or a mono or a polysaccharide, in particular a sugar.

The most commonly used polyhydric compound and the preferred compound for use in the present invention is glycerol.

The waterglass solutions used to produce the fire resistant interlayers of this invention preferably comprise from 6 to 10% by weight by weight of a polyhydric organic compound and from 30 to 70% by weight of water.
The thickness of the dried interlayer will generally be in the range 0.5 to 2.0 mm. Laminates having a thicker interlayer may be produced by bringing two sheets of glass having a thinner interlayer say from 0.5 to 1.0 mm thick into face to face contact so as to form an interlayer which would be from 1.0 to 2.0 mm thick.

Fire resistant laminates comprising an intumescent interlayer according to this invention will generally comprise an interlayer which is from 1.0 to 3.0 mm thick. The glass sheets used in these laminates will typically be sheets of soda lime float glass.

The thickness of the glass sheet on which the solutions are dried may vary typically from 2.0 mm to 4.0 mm. An edge barrier formed from a material such as a clay may be provided around the edge of the glass sheet so as to retain the solution on the glass. The glass will most commonly be soda lime float glass. Toughened and annealed float glass may also be used. Glass panes having a functional coating upon one or both surfaces may also be used. The coated surface may be on the inside or the outside of the laminate. Coatings which are known to absorb UV radiation may be especially advantageous. Other coated glass panes which may be used include solar control glasses and self cleaning photoactive glasses.

A fire resistant laminate may be formed by placing a second glass sheet on top of the interlayer and laminating the structure produced. Mounting this second sheet so as to place the interlayers in contact with each other results in a laminate having a thicker interlayer. Mounting this second glass sheet so that its glass surface contacts the interlayer on the first sheet and subsequently placing a third glass sheet on top of the interlayer on the second glass sheet results in a laminate having two interlayers mounted between three panes of glass

### The invention is illustrated by the following examples

A commercially available fire resistant glass comprising a silicate based interlayer was supported in a vertical position in such a way that the edge region was freely accessible. A liquid sealant having one of the compositions recited below was applied to the upward facing edge of the fire-resistant glazing which had previously been cleaned by means of isopropyl alcohol or another suitable agent. By combining the use of a suitable dispensing device and a doctor blade, an even coating of the liquid sealant was applied on the upward facing edge of the fire-resistant glass. The curing of the liquid sealant using UV radiation led to the formation of a highly transparent and colourless layer on the edge of the fire resistant glass.

No yellowing or clouding of the sealant was observed even after 96 hours at 70°C. The sealant used according to the invention can, in particular, protect waterglass-containing fire-resistant material of fire-resistant glasses against direct contact with water from the surroundings.

### Example 1

| **Constituent** | **Proportion [%]** |
|---|---|
| HIGHLINK^{®} NanOG 107-53 ⁽¹⁾ | 48.5 |
| PPGMA ⁽²⁾ | 40 |
| Genomer 4269/M22^{® (3)} | 10 |
| Darocur 1173^{® (4)} | 1.5 |

Concerning the constituents used
(1) Dipropyleneglycol Diacrylate containing 50% SiO₂ (*Clariant*)
(2) Polypropyleneglycol methacrylate Mn∼375 (*Sigma-Aldrich*)
(3) Aliphatic Urethane Acrylate (*Rahn*)
(4) 2-Hydroxy-2-methyl-1-phenyl-propan-1-one (*Ciba Specialty Chemicals*)

### Example 2

| **Constituent** | **Proportion [%]** |
|---|---|
| HIGHLINK^{®} NanOG 108-32 ⁽¹⁾ | 25 |
| PPGMA ⁽²⁾ | 73.5 |
| Darocur 1173^{® (3)} | 1.5 |

Concerning the constituents used
(1) Tripropyleneglycol Diacrylate containing 30% SiO₂ (*Clariant*)
(2) Polypropyleneglycol methacrylate Mn∼375 (*Sigma-Aldrich*)
(3) 2-Hydroxy-2-methyl-1-phenyl-propan-1-one (*Ciba Specialty Chemicals*)

### Example 3

| **Constituent** | **Proportion [%]** |
|---|---|
| HIGHLINK^{®} NanOG 103-53 ⁽¹⁾ | 48.5 |
| PPGMA ⁽²⁾ | 50 |
| Darocur 1173^{® (3)} | 1.5 |

Concerning the constituents used
(1) 1,6-Hexanediol Diacrylate containing 50% SiO₂ (*Clariant*)
(2) Polypropyleneglycol methacrylate Mn∼375 (*Sigma-Aldrich*)
(3) 2-Hydroxy-2-methyl-1-phenyl-propan-1-one (*Ciba Specialty Chemicals*)

### Example 4

| **Constituent** | **Proportion [%]** |
|---|---|
| HIGHLINK^{®} NanOG 130M-31 ⁽¹⁾ | 55 |
| Miramer M600⁽²⁾ | 15 |
| Genomer 4269/M22^{® (3)} | 25 |
| Genocure MBF^{® (4)} | 5 |

Concerning the constituents used
(1) Isobornyl acrylate containing 30% SiO₂ *(Clariant)*
(2) Dipentaerythritol Hexaacrylate *(Rahn)*
(3) Aliphatic Urethane Acrylate *(Rahn)*
(4) Methylbenzoylformate *(Rahn)*

### Example 5

| **Constituent** | **Proportion [%]** |
|---|---|
| HIGHLINK^{®} NanOG 130M-31 ⁽¹⁾ | 52.2 |
| Miramer M600⁽²⁾ | 14.24 |
| Genomer 4269/M22^{® (3)} | 23.73 |
| Genocure MBF^{® (4)} | 4.75 |
| Mequinol⁽⁵⁾ | 0.95 |
| Pentaerythritol tetrakis (3-mercaptopropionate)⁽⁶⁾ | 5 |

Chemical description of constituents used
(4) Isobornyl acrylate containing 30% SiO₂ (*Clariant*)
(5) Dipentaerythritol Hexaacrylate (*Rahn*)
(6) Aliphatic Urethane Acrylate (*Rahn*)
(7) Methylbenzoylformate (*Rahn*)
(8) 4-Methoxyphenol (*Sigma-Aldrich*)
(9) Pentaerythritol tetrakis(3-mercaptopropionate) (*Sigma-Aldrich*)

## Claims

1. A fire resistant laminated glazing comprising at least two panes of glass, at least one intumescent fire resistant interlayer having a seal covering the exposed edges of the interlayer or interlayers **characterised in that** the sealant comprises a nanoparticulate silica.

2. A glazing according to claim 1 **characterised in that** the nanoparticulate silica is dispersed in a film forming medium.

3. A glazing according to claim 1 **characterised in that** the sealant comprises an adhesive tape having nanoparticulate silica dispersed in the adhesive layer.

4. A glazing according to claim 2 **characterised in that** the film forming medium is a polymerisable liquid medium.

5. A glazing according to claim 4 **characterised in that** the film forming medium comprises a polymerisation initiator.

6. A glazing according to any of claims 3 to 5 **characterised in that** the film forming medium comprises a photopolymerisable monomer or oligomer and a photoinitiator.

7. A glazing according to any of claims 3 to 6 **characterised in that** the film forming medium is a medium selected from the group comprising epoxy resins, urethanes, silicones, acrylates, methacrylates and their co-polymers.

8. A glazing according to any of claims 3 to 7 **characterised in that** the film forming medium comprises an oxygen scavaenger.

9. A glazing according to any of the preceding claims **characterised in that** the nanoparticulate silica is an organically modified nanoparticulate silica.

10. A glazing according to any of the preceding claims **characterised in that** the seal comprises from 1% to 75% by weight of silica.

11. A glazing according to claim 10 **characterised in that** the seal comprises from 10% to 50% by weight of silica.

12. A glazing according to any of the preceding claims **characterised in that** the thickness of the seal above the exposed surface on the interlayer is less than 3mm.

13. A glazing according to any of claims 1 to 12 **characterised in that** the appearance of the sealant is not significantly changed after exposure to the atmosphere at a temperature of 70°C for a period of 96 hours

14. A method for sealing the edge of a fire resistant glazing which comprises at least two glass panes and at least one intumescent interlayer which method comprises applying a sealant comprising a nanoparticulate silica to the exposed edges of the interlayer.

15. A method according to claim 14 **characterised in that** a dispersion of a nanoparticulate silica in a film forming medium is applied to the exposed edges of the interlayer.

16. A method according to either of claims 14 or 15 **characterised in that** the film forming medium is a polymerisable medium.

17. A method according to claim 16 **characterised in that** the polymerisable medium is a photopolymerisable medium.

18. A method according to claim 16 **characterised in that** the sealant comprises a photopolymerisation intiator.

19. A method according to any of claims 14 to 18 **characterised in that** the sealant comprises an oxygen scavenger.

20. A method according to any of claims 14 to 19 **characterised in that** a film of the dispersion is applied to the exposed edges of the interlayer and the film is polymerised by UV irradiation.

21. A method according to claim 20 **characterised in that** the polymerisation is carried our in an inert atmosphere.

22. A method according to any of claims 14 to 21 **characterised in that** the desired thickness of seal is obtained by repeated application of the sealant.

## Patentansprüche

1. Feuerfeste, laminierte Verglasung mit wenigstens zwei Glasplatten, zumindest einer feuerfesten Brandschutz-Zwischenschicht mit einer Dichtung, welche die freiliegenden Kanten der Zwischenschicht oder der Zwischenschichten bedeckt, **dadurch gekennzeichnet, dass** das Dichtungsmaterial nanopartikuläres Siliciumdioxid enthält.

2. Verglasung nach Anspruch 1, **dadurch gekennzeichnet, dass** das nanopartikuläre Siliciumdioxid in einem filmbildenden Medium dispergiert ist.

3. Verglasung nach Anspruch 1, **dadurch gekennzeichnet, dass** das Dichtungsmaterial ein Klebeband enthält, welches in seiner Klebeschicht dispergiertes nanopartikuläres Siliciumdioxid enthält.

4. Verglasung nach Anspruch 2, **dadurch gekennzeichnet, dass** das filmbildende Medium ein polymerisierbares, flüssiges Medium ist.

5. Verglasung nach Anspruch 4, **dadurch gekennzeichnet, dass** das filmbildende Medium einen Polymerisationsinitiator enthält.

6. Verglasung nach einem der Ansprüche 3 bis 5, **dadurch gekennzeichnet, dass** das filmbildende Medium ein polymerisierbares Monomer oder Oligomer und einen Photoinitiator enthält.

7. Verglasung nach einem der Ansprüche 3 bis 6, **dadurch gekennzeichnet, dass** das filmbildende Medium ein Medium ist, welches ausgewählt ist aus der Gruppe umfassend Epoxidharze, Urethane, Silicone, Acrylate, Methacrylate and ihre Copolymere.

8. Verglasung nach einem der Ansprüche 3 bis 7, **dadurch gekennzeichnet, dass** das filmbildende Medium einen Sauerstoff-Fänger enthält.

9. Verglasung nach einem der vorhergehenden Ansprüche, **dadurch gekennzeichnet, dass** das nanopartikuläre Siliciumdioxid organisch modifiziertes Siliciumdioxid ist.

10. Verglasung nach einem der vorhergehenden Ansprüche, **dadurch gekennzeichnet, dass** die Dichtung zwischen 1 und 75 Gew.-% Siliciumdioxid enthält.

11. Verglasung nach Anspruch 10, **dadurch gekennzeichnet, dass** die Dichtung zwischen 10 Gew.-% und 50 Gew.-% Siliciumdioxid enthält.

12. Verglasung nach einem der vorhergehenden Ansprüche, **dadurch gekennzeichnet, dass** die Dicke der Dichtung über der freiliegenden Oberfläche auf der Zwischenschicht weniger als 3 mm beträgt.

13. Verglasung nach einem der Ansprüche 1 bis 12, **dadurch gekennzeichnet, dass** sich das Erscheinungsbild des Dichtungsmaterials, nachdem es der Atmosphäre bei einer Temperatur von 70 C für eine Periode von 96 Stunden ausgesetzt wurde, nicht wesentlich verändert.

14. Verfahren zum Abdichten des Rands einer feuerfesten Verglasung, welches zumindest zwei Glasplatten und zumindest eine Brandschutzzwischenschicht enthält, wobei das Verfahren das Aufbringen eines nanopartikuläres Siliciumdioxid enthaltenden Dichtungsmaterials auf die freiliegenden Kanten der Zwischenschicht umfasst.

15. Verfahren nach Anspruch 14, **dadurch gekennzeichnet, dass** eine Dispersion von nanopartikulärem Siliciumdioxid in einem filmbildenden Medium auf die freiliegenden Kanten der Zwischenschicht aufgebracht wird.

16. Verfahren nach einem der Ansprüche 14 oder 15, **dadurch gekennzeichnet, dass** das filmbildende Medium ein polymerisierbares Medium ist.

17. Verfahren nach Anspruch 16, **dadurch gekennzeichnet, dass** das polymerisierbare Medium ein photopolymerisierbares Medium ist.

18. Verfahren nach Anspruch 16, **dadurch gekennzeichnet, dass** das Dichtungsmittel einen Photopolymerisationsinitiator umfasst.

19. Verfahren nach einem der Ansprüche 14 bis 18, **dadurch gekennzeichnet, dass** das Dichtungsmaterial einen Sauerstoff-Fänger enthält.

20. Verfahren nach einem der Ansprüche 14 bis 19, **dadurch gekennzeichnet, dass** ein Film der Dispersion auf die freiliegenden Kanten der Zwischenschicht aufgetragen wird und der Film durch UV-Bestrahlung polymerisiert wird.

21. Verfahren nach Anspruch 20, **dadurch gekennzeichnet, dass** die Polymerisierung in einer inerten Atmosphäre durchgeführt wird.

22. Verfahren nach einem der Ansprüche 14 bis 21, **dadurch gekennzeichnet, dass** die gewünschte Dicke der Dichtung durch wiederholtes Auftragen des Dichtungsmaterials erreicht wird.

## Revendications

1. Vitrage stratifié résistant au feu comprenant au moins deux pans de verre, au moins une couche intermédiaire intumescente résistant au feu présentant un scellement recouvrant les bords exposés de la couche intermédiaire ou des couches intermédiaires, **caractérisé en ce que** l'agent de scellement comprend une silice nanoparticulaire.

2. Vitrage selon la revendication 1, **caractérisé en ce que** la silice nanoparticulaire est dispersée dans un milieu formant un film.

3. Vitrage selon la revendication 1, **caractérisé en ce que** l'agent de scellement comprend une bande adhésive présentant de la silice nanoparticulaire dispersée dans la couche adhésive.

4. Vitrage selon la revendication 2, **caractérisé en ce que** le milieu formant un film est un milieu liquide polymérisable.

5. Vitrage selon la revendication 4, **caractérisé en ce que** le milieu formant un film comprend un initiateur de polymérisation.

6. Vitrage selon l'une quelconque des revendications 3 à 5, **caractérisé en ce que** le milieu formant un film comprend un monomère ou un oligomère photopolymérisable et un photoinitiateur.

7. Vitrage selon l'une quelconque des revendications 3 à 6, **caractérisé en ce que** le milieu formant un film est un milieu choisi dans le groupe constitué de résines époxy, d'uréthanes, de silicones, d'acrylates, de méthacrylates et de leurs copolymères.

8. Vitrage selon l'une quelconque des revendications 3 à 7, **caractérisé en ce que** le milieu formant un film comprend un fixateur d'oxygène.

9. Vitrage selon l'une quelconque des revendications précédentes, **caractérisé en ce que** la silice nanoparticulaire est une silice nanoparticulaire organiquement modifiée.

10. Vitrage selon l'une quelconque des revendications précédentes, **caractérisé en ce que** le scellement comprend de 1 % à 75 % en masse de silice.

11. Vitrage selon la revendication 10, **caractérisé en ce que** le scellement comprend de 10 % à 50 % en masse de silice.

12. Vitrage selon l'une quelconque des revendications précédentes, **caractérisé en ce que** l'épaisseur du scellement au-dessus de la surface exposée sur la couche intermédiaire est inférieure à 3 mm.

13. Vitrage selon l'une quelconque des revendications 1 à 12, **caractérisé en ce que** l'apparence de l'agent de scellement n'est pas significativement modifiée après une exposition à l'atmosphère à une température de 70°C sur une durée de 96 heures.

14. Procédé pour le scellement du bord d'un vitrage résistant au feu qui comprend au moins deux pans de verre et au moins une couche intermédiaire intumescente, lequel procédé comprend l'application d'un agent de scellement comprenant une silice nanoparticulaire aux bords exposés de la couche intermédiaire.

15. Procédé selon la revendication 14, **caractérisé en ce qu'**une dispersion d'une silice nanoparticulaire dans un milieu formant un film est appliquée sur les bords exposés de la couche intermédiaire.

16. Procédé selon l'une quelconque des revendications 14 ou 15, **caractérisé en ce que** le milieu formant un film est un milieu polymérisable.

17. Procédé selon la revendication 16, **caractérisé en ce que** le milieu polymérisable est un milieu photopolymérisable.

18. Procédé selon la revendication 16, **caractérisé en ce que** l'agent de scellement comprend un initiateur de photopolymérisation.

19. Procédé selon l'une quelconque des revendications 14 à 18, **caractérisé en ce que** l'agent de scellement comprend un fixateur d'oxygène.

20. Procédé selon l'une quelconque des revendications 14 à 19, **caractérisé en ce qu'**un film de la dispersion est appliqué sur les bords exposés de la couche intermédiaire et le film est polymérisé par une irradiation d'UV.

21. Procédé selon la revendication 20, **caractérisé en ce que** la polymérisation est réalisée dans une atmosphère inerte.

22. Procédé selon l'une quelconque des revendications 14 à 21, **caractérisé en ce que** l'épaisseur souhaitée du scellement est obtenue par une application répétée de l'agent de scellement.
